# EUROPEAN PATENT APPLICATION

(11) **EP 0 780 757 A2**
(43) Date of publication of application: **25.06.1997**
(21) Application number: 96308311.8
(22) Date of filing: 18.11.1996
(51) Int. Cl.: G06F 3/033

(54) **Graphical user interface**

(30) Priority: 21.12.1995 IT MI952698
(71) Applicant: International Business Machines Corporation, Armonk, N.Y. 10504 (US)
(72) Inventor: de Judicibus, Dario, 00144 Rome (IT)
(74) Representative: Zerbi, Guido Maria

(57) **Abstract**

In a window oriented operating system, a graphical user interface which provides a "shrink button" to switch a window from a normal status where the whole window is represented to a reduced status where only a portion of the window is displayed while maintaining at least a partial operability of the commands of the window. The advantage of such a shrink button is that the user could be not interested in having the whole window displayed but he needs to keep the window commands operable. The user can so reduce the window to the command area only saving space on the desktop and improving the performances of the application, since the feedback is no longer required. In the image processing application this could be very useful.

## Description

The present invention relates to a user interfaces and particularly to a graphical user interface for graphically displaying a plurality of user interface objects.

Data processing systems are usually provided with a graphical user interface (GUI) to allow a user to control the computer system and to present the results of user actions on the system display. In a graphical user interface, applications and data are generally presented as objects depicted on a user interface. A user is then provided with a graphical, intuitive interface to a complex data processing system which permits graphic selection of depicted objects and manipulation of applications corresponding to those objects.

It is usually possible to simultaneously execute several software applications. The execution of multiple applications simultaneously is often referred to as "multitasking". It is desirable in such environments to allow the user to view some or all the applications simultaneously. This is often accomplished by the utilization of the concept of "windows" wherein all or part of multiple applications are displayed in separate viewports of a computer system video display system. The complexity of many software applications requires substantially all of a computer's video display and it is therefore common to overlay one window upon another window, or to represent a second application with a miniature graphic representation or "icon". Further, it is known to have multiple software applications present on a computer display simultaneously, one or more of which may be active at any given time, and which may be displayed in a window or icon.

There may be several windows simultaneously present on the desktop with each window displaying information that is generated by a different application program. Each application program presents information to the user through its window by drawing images, graphics or text within the window region. The user, in turn, communicates with the application by pointing at standard graphical objects in the window with a pointer that is controlled by a pointing device, such as a mouse, and then selecting the objects, or by typing information into a keyboard associated with the monitor. Selection of the objects may be effected by actuating the mouse to move the pointer onto or near the objects and pressing and quickly releasing, i.e. clicking, a button on the mouse, or by manipulating a cursor via the keyboard.

These user interface objects may be easily manipulated utilizing a standard set of interface commands. For example, the user may move the windows around on the display screen, change their sizes and appearances, shrink down a window to a so-called icon, rearrange the objects in relative background/foreground position so as to arrange the desktop in a convenient manner.

There are a number of different graphical user interface environments commercially available which utilize the arrangement described above. These environments include the System 7 operating system developed by Apple Computer, Inc. (System 7 is a trademark of Apple Computer, Inc.), the Windows graphical user interface developed by the Microsoft Corporation (Windows is a trademark of Microsoft Corporation) and the OS/2 Presentation Manager developed by International Business Machines Corporation (OS/2 and Presentation Manager are trademark of International Business Machines Corporation).

A problem in a graphical user interface is that when several applications are opened simultaneously, the desktop may assume a cluttered appearance.

A user has the option to shrink down any window to an icon, but in this case the window itself would loose its operability. So the user must keep the whole window displayed in order to maintain the operability of the application related to the window. Under certain circumstances it could be useful to maintain the operability of a reduced set of control operations. Also the user could be not interested in having the result of the operation displayed in the window.

An example is an image processing program. The window related to this program comprises a command area which represents the operations that can be performed and a display area where an image is represented. Let's suppose the following operations to be performed by the user: load an image, load a new palette colour, apply the palette to the image and save the image with a new name.

Most operations are delayed by the feedback provided by the program. Those skilled in the art will appreciate that such feedback significantly increases the waiting time of the user. If the user is not interested in the immediate feedback, it could be useful to have on the desktop a "reduced" window where only the command area is displayed. In this reduced status no visual feedback is required and the process is much faster. Furthermore the user has more space on the desktop for displaying the other windows.

Another case where such a change of status of the window from a "normal" one to a reduced one could be needed is when a window contains text and images. Sometimes the user could be interested to have only the text part or the image part displayed.

With the known systems it is not possible to switch the window between a normal status and a reduced one as described above unless by changing the window parameters and layouts with a long and complicate procedure.

It is an object of the present invention to provide a technique which alleviates the above drawbacks.

According to the invention, we provide a graphical user interface for graphically displaying a plurality of user interface objects, at least one of said plurality of user interface objects: being related to an application and comprising: a display area for displaying the results of the processing of the related application; a command area for controlling the display area and the related application; switching means for selectively commuting between a normal status where the whole at least one user interface object is displayed and a reduced status where only a portion of the at least one user interface object is displayed.

Further, according to the present invention, we provide, in a data processing system, a method for graphically displaying a plurality of user interface objects at least one of said plurality of user interface objects: being related to an application and comprising: a display area for displaying the results of the elaboration of the related application; a command area for controlling the display area and the related application; the method comprising the step of selectively switch the at least one user interface object between a normal status where the whole at least one user interface object is displayed and a reduced status where only a portion of the at least one user interface object is displayed.

Various embodiments of the invention will now be described in detail by way of examples, with reference to accompanying figures, where:
Fig. 1 shows a computer which may be utilized to implement the method and system of the present invention;
Fig. 2 shows a graphical user interface used with the present invention;
Fig. 3 is a block diagram showing the interactions between a plurality of application programs and the window manager;
Fig. 4 shows schematically the structure of a window according to a preferred embodiment of the present invention;
Fig. 5 shows some examples of preferred embodiments of the present invention.

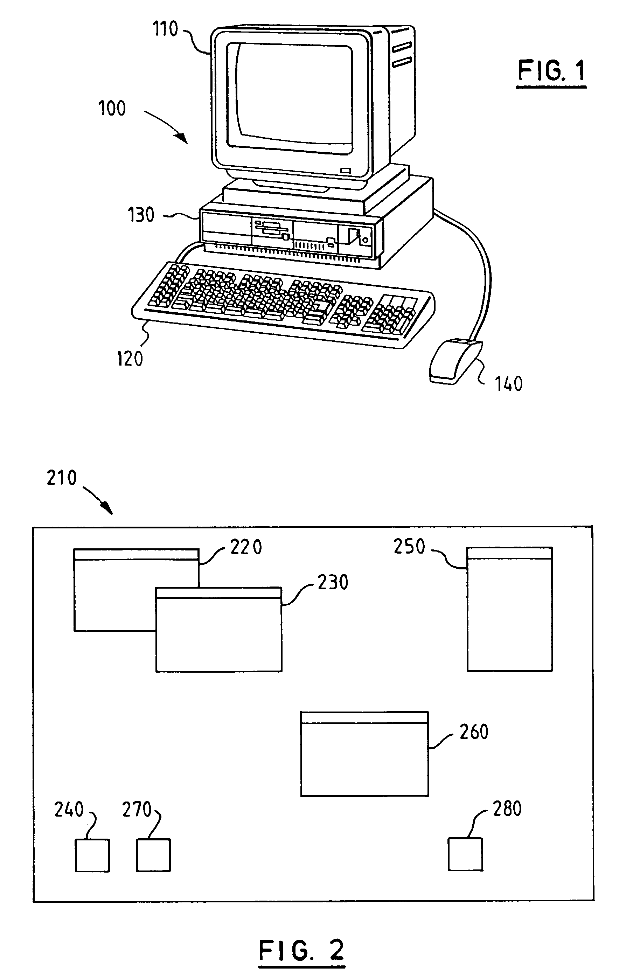

With reference now to the figures and in particular with reference to Figure 1, there is depicted a computer 100 which may be utilized to implement the method and system of the present invention. The computer 100 preferably includes a display unit 110 and a keyboard 120, coupled in a manner well known in the art. Additionally, the computer 100 includes a processor system unit 130 which may serve to mount a fixed disk drive and a diskette drive in addition to the main processor and memory. Further, in order to facilitate the utilization of a graphic user interface, computer 100 preferably includes a graphic pointing device, such as a mouse 140, which may be utilized to manipulate the position of a pointer (not shown) within a visual display on the screen 110. Those skilled in the art will appreciate that computer 100 may be implemented utilizing any state-of-the-art personal computer, such as the PS/2 Personal Computer manufactured by International Business Machines Corporation. (PS/2 is a trademark of International Business Machines Corporation).

With regard now to Figure 2, a graphical user interface which may be utilized to implement the method and system of the present invention is shown. The graphical display is typically arranged to resemble a single desktop 210; execution of an application program involves one or more user interface objects represented by windows (220,230) and icons (240). Typically, there may be several other windows 250, 260 and icons 270, 280 simultaneously present on the desktop and displaying information that is generated by different applications.

The window environment is generally part of the operating system software that includes a collection of utility programs for controlling the operation of the computer system 100. The operating system, in turn, interacts with application programs to provide higher level functionality, including a direct interface with the user. Specifically, the application programs make use of operating system functions by issuing task commands to the operating system which then performs the requested task. For example, an application program may request that the operating system display certain information on the window 220 for presentation to the user.

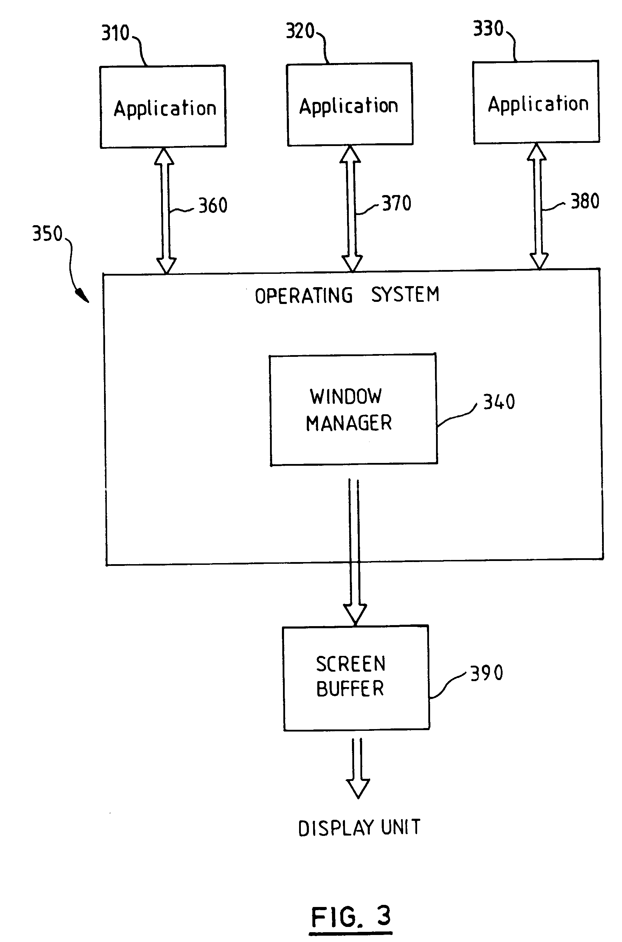

Fig. 3 is a schematic illustration of the interaction of a plurality of application programs, shown at 310, 320 and 330 and a window manager 340. The window manager 340 is generally responsible for managing the windows that a user views during operation of the application programs of the computer. That is, it is generally the task of the window manager to keep track of the location and size of the window and window areas which must be drawn and redrawn on the desktop. The window manager is generally well-known and is incorporated in commercially available graphical user interface environments. The window manager 340 is typically located in an operating system 350 which may be executing simultaneously with the application programs on the computer system 100 (Fig.1). Each program 310, 320 and 330 interfaces with the operating system 350 as illustrated schematically by arrows 360, 370 and 380. In order to display information on a computer screen, application programs 310, 320 and 330 generate and send display requests to the window manager 340 which, in turn, interfaces directly with a screen buffer 390 as illustrated schematically in the figure. The content of the screen buffer 390 is then provided to the display unit 110 (Fig.1).

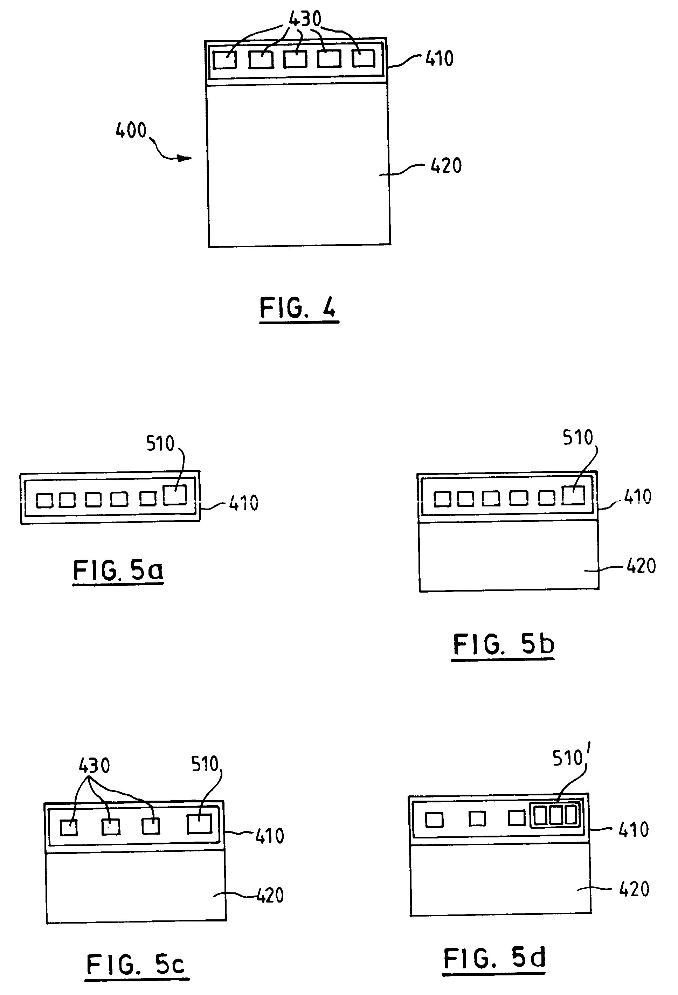

Fig. 4 shows schematically the structure of a window in an operating system 350. It comprises a command area 410 and a display area 420. In the preferred embodiment the command area 410 comprises a plurality of icons called "buttons" each one associated to a predefined function. The user can activate such functions by placing the cursor on the button using the pointing device 140 or the keyboard. In other embodiments by operating the buttons the user can display a "pop-up" menu which gives a list of possible operations.

In the display area the user can see the results and the feedbacks of the operations performed.

According to the present invention the user can choose to have the window displayed in the normal status described above or to switch to a reduced status where a portion of the window is not displayed, but still maintaining the full operability of the window.

Fig. 5 shows some examples. The user interface comprises a switching command 510 which enables the user to select the status he prefers. As mentioned above, for example, under certain circumstances the user may wish not to have the display area on the screen. This could save space on the desktop and significantly increase the speed of processing especially when an image is represented in the display area, because the image does not need to be refreshed each time a feedback is received by the process. In the example of Fig. 5a a window is represented in a reduced status in which only the command area is displayed and operable.

In other embodiments different kinds of reduced window can be available to the user. For example only a portion of the display area could be displayed. Fig. 5b is an example of reduced status of a window where the whole command area is displayed and operable together with a limited portion of the display area.

Further another option is to reduce the set of available operations and buttons. In this case the reduced status may limit the command area to a subset of the operations available. Fig. 5c is an example of this "partially operable" reduced status.

Alternatively the user interface may offer the option to choose among a plurality of different reduced statuses by selecting the proper switching command 510', which in such a case will be a multiple choice command like the one represented in Fig. 5d.

Those skilled in the art will appreciate that the practical implementation of the above described switch button is a routine activity which can be done by properly modifying the window manager 340.

## Claims

1. A graphical user interface for graphically displaying a plurality of user interface objects (400), at least one of said plurality of user interface objects (400):
being related to an application and comprising:
a display area (420) for displaying the results of the processing of the related application;
a command area (410) for controlling the display area (420) and the related application;
switching means (510) for selectively commuting between a normal status where the whole at least one user interface object (400) is displayed and a reduced status where only a portion of the at least one user interface object (400) is displayed.

2. The graphical user interface of claim 1 wherein the command area is at least partially operable while the at least one user interface object (400) is in the reduced status.

3. The graphical user interface of claim 1 or 2 wherein the at least one user interface object has a plurality of reduced statuses.

4. The graphical user interface of any preceding claim wherein said switching means (510) is operable by a mouse device.

5. The graphical user interface of any preceding claim wherein said switching means (510) comprises a graphical button.

6. The graphical user interface of claim 1, 2, 3 or 4 wherein said switching means (510) comprises a pop-up menu.

7. In a data processing system (100), a method for graphically displaying a plurality of user interface objects (400) at least one of said plurality of user interface objects (400):
being related to an application and comprising:
a display area (420) for displaying the results of the elaboration of the related application;
a command area (410) for controlling the display area (420) and the related application;
the method comprising the step of selectively switch the at least one user interface object (400) between a normal status where the whole at least one user interface object (400) is displayed and a reduced status where only a portion of the at least one user interface object (400) is displayed.

8. The method of claim 7 wherein the command area is at least partially operable when the user interface object (400) is in the reduced status.

9. The method of claim 7 or 8 wherein at least one user interface object has a plurality of reduced statuses.
